# FASCICULE DE BREVET EUROPEEN

(11) **EP 0 555 709 B1**
(45) Date de publication et mention de la délivrance du brevet: **01.05.1996**
(21) Numéro de dépôt: 93101465.8
(22) Date de dépôt: 30.01.1993
(51) Int. Cl.: B65H 29/34, B65G 57/06, B23D 33/02

(54) **Cadre de support momentané d'un élément en plaque horizontal au sein d'une machine**
Tragrahmen zum zeitweiligen Abstützen von horizontalen Scheiben während des Stapelns
Frame for temporary supporting a horizontal sheet when stacking

(30) Priorité: 10.02.1992 CH 386/92
(43) Date de publication de la demande: 18.08.1993
(73) Titulaire: BOBST S.A., CH-1001 Lausanne (CH)
(72) Inventeur: Fornay, Jean-François, CH-1400 Yverdon-les-Bains 3 (CH); Recordon, Olivier, CH-1008 Prilly (CH)
(74) Mandataire: Colomb, Claude

(56) Documents cités:
- DE-C- 812 537
- FR-A- 2 612 163
- US-A- 2 257 469

## Description

La présente invention est relative à un cadre à géométrie variable pour le support momentané d'un élément en plaque horizontal, tel que feuille de papier ou de carton, élément amené à effectuer par la suite une translation verticale entre des taquets de guidage et d'équerrage comme, par exemple, au sein d'une station de réception où sont constituées des piles d'éléments.

On rencontre une telle station de réception à la fin d'une machine de découpe à platine où des feuilles de papier ou carton, après avoir été coupées au format et débarrassées des déchets, sont amenées dans cette dernière station par une barre de pinces pour être déposées avec précision sur le dessus d'une pile après ouverture des pinces ou découpe du bord frontal par l'action d'une guillotine.

Une feuille peut comprendre plusieurs posez jointives latérales ou successives et solidaires les unes aux autres par des points d'attache. Il est impératif de maintenir toutes les posez dans un plan pendant l'action de la guillotine puis d'ouvrir le cadre de support de manière synchronisée pour libérer la feuille qui doit chuter dans un mouvement uniforme.

Dans les machines actuelles, le maintien de la feuille dans un plan est réalisé par une tablette arrière rétractable et une ou plusieurs languettes latérales horizontales pivotables dans un mouvement fauchant. Ce type de maintien latéral s'avère insatisfaisant en ce qu'il soutient les posez sur une surface réduite et, dans la plupart des cas, en des endroits incorrects de la feuille. On assiste alors trop fréquemment à l'effondrement de la feuille ou à la séparation prématurée des poses ou encore à des chutes non synchronisées qui entraînent une mauvaise formation du paquet. Le rythme et la qualité de production s'en trouvent alors gravement affectés. De plus, les mécanismes d'ouverture et de fermeture des appuis pivotants sont relativement compliqués donc onéreux à réaliser.

On connaît également des dispositifs traitant des feuilles entières pour les transporter, en les retenant au-dessus d'une station d'empilage, pour ensuite les relacher à l'endroit voulu sur une pile formée sur un transporteur d'évacuation. Un tel dispositif est décrit dans le brevet US-A-2 257 469. Dans ce document, les feuilles sont transportées par des doigts escamotables montés sur une chaîne se déplaçant de manière à, dans un premier temps transporter la feuille puis , dans un deuxième temps relacher celle-ci à l'endroit voulu en escamotant les doigts escamotables.

Ce dispositif présente les mêmes inconvénients que ceux cités précédemment et les mêmes complications.

Le but de la présente invention est un cadre de support momentané de feuilles assurant une prise en charge d'une feuille le plus tôt possible lors de son introduction dans la station de réception, permettant un transport soigné, assurant en fin de parcours et lors de l'action d'une guillotine un maintien complet et efficace et, enfin, une ouverture parfaitement synchronisée afin d'assurer une chute parfaite de cette feuille.

Un autre but est un dispositif du type précédemment cité dont la conception soit particulièrement simplifiée pour en diminuer d'autant les coûts de réalisation et pour en augmenter la vitesse d'action de par l'inertie moindre des pièces mises en oeuvre.

Ces buts sont réalisés par un cadre de support du fait que chacun des deux appuis latéraux est constitué d'une barre plate horizontale s'étendant sensiblement sur toute la longueur du cadre et dont le déplacement, d'une position avancée de support de la feuille à une position rétractée autorisant la chute verticale de la feuille, est assuré par un actuateur agissant sur la barre plate soit directement soit tout au plus au travers d'un levier unique.

Grâce à la faible inertie des barres plates et à la liaison quasi-directe avec les actuateurs, il est possible d'activer instantanément les appuis latéraux en position avancée à l'arrivée d'une feuille qui est alors progressivement soutenue de manière suffisante par ces barres latérales plates. Les côtés de la feuille, et notamment les lignes de refoulage ou de séparation de poses, sont maintenus en permanence sur ces barres latérales évitant ainsi que ces feuilles ne viennent se plier accidentellement "en accordéon". De plus, il s'est avéré que la tablette arrière pouvait être supprimée n'étant plus véritablement nécessaire. Enfin, la rapidité d'action de ces appuis latéraux permet une excellente synchronisation des mouvements successifs des feuilles.

Selon un premier mode de réalisation préféré, la barre plate est orientée de telle sorte que sa largeur soit dans le sens vertical, et le mode de maintien de ses extrémités est tel que cette barre est apte à fléchir que dans le plan horizontal, la position de la partie centrale de la barre étant directement contrôlée par un actuateur horizontal transversal.

De préférence alors, chaque extrémité d'une barre présente un orifice vertical oblong et orienté dans le sens longitudinal, lequel orifice est traversé par un axe ou goupille vertical de maintien qui est solidaire du châssis de la station. En alternative, chaque extrémité peut être insérée en coulissement dans l'ouverture d'un étrier dont la section rectangulaire verticale présente une hauteur constante identique à celle de la barre et une largeur croissante en direction de la barre.

Avantageusement alors, les barres sont réalisées en matériaux synthétiques tels que plastique et plus particulièrement polyamide ou tout autre matériau présentant un coefficient d'élasticité compris entre 900 N/mm2 et 2000 N/mm2.

Selon un second mode de réalisation de l'invention, la barre plate est orientée de telle sorte que sa largeur soit dans le sens horizontal, l'une de ses extrémités étant montée en pivotement autour d'un axe vertical, l'autre extrémité étant directement avancée ou reculée par un actuateur horizontal linéaire transversal. Avantageusement, l'extrémité aval de la barre est pivotante assurant une chute progressive de la feuille à partir de son bord amont.

Selon un troisième mode de réalisation, la barre plate est orientée de telle sorte que sa largeur soit dans le sens horizontal, l'une de ses extrémité étant reliée à l'une des branches d'un levier dont l'autre branche peut être déplacée par un actuateur linéaire, l'autre extrémité de la barre étant reliée à une biellette parallèle à la première branche du levier; la biellette, le levier et l'actuateur étant situés sensiblement dans le même plan horizontal que la barre plate. Ainsi, si la biellette et la première branche de levier présentent un angle de l'ordre de 45 degrés avec la barre en position avancée, son retrait s'effectue essentiellement sous la forme d'une translation linéaire horizontale et orthogonale à la barre, retrait qui est seulement légèrement fauchant.

Selon un quatrième mode de réalisation, la barre plate est mobile en rotation le long d'un axe proche et parallèle à son bord longitudinal externe, et soit un actuateur rotatif est directement relié à la barre dans le prolongement de son axe de rotation, soit un actuateur linéaire transversal agit sur une branche protubérant de la barre au niveau de l'axe de rotation.

Dans tous les cas, l'actuateur peut être à double action d'avance et de retrait, mais, pour des considérations de coût, cet actuateur est de préférence à simple action d'avance linéaire lorsque activé, des moyens de rappel parallèles à l'actuateur étant prévus pour rétracter la barre au repos. Dans le cas d'un actuateur rotatif à simple action, il convient de lui adjoindre un moyen de rappel en torsion tel qu'un ressort hélicoïdal.

Dans tous les cas également, les extrémités des barres ainsi que les actuateurs correspondants peuvent être installés sur des pièces de supports engagées sur des axes le long desquels ils sont déplaçables en fonction du format de l'élément en plaque.

Si désiré, une tablette rétractable complétant le cadre à l'arrière peut être également constituée par une barre fléchissante que dans un plan horizontal, la position de sa partie centrale étant contrôlée également par des moyens de positionnement tels qu'actuateurs à double action : rentrée, sortie.

L'invention sera mieux comprise à l'étude de plusieurs modes de réalisation pris à titre d'exemples nullement limitatifs et illustrés par les figures annexées dans lesquelles :
- La figure 1 est une vue schématique en perspective d'un premier mode de réalisation avec une barre plate orientée sur sa tranche,
- La figure 2 est une vue schématique en perspective d'un second mode de réalisation avec une barre plate dans le sens horizontal et pivotante en son extrémité aval,
- La figure 3 est une vue schématique en perspective d'un troisième mode de réalisation avec une barre plate dans le sens horizontal et mobile en translation orthogonale,
- La figure 4 est une vue schématique en perspective d'un quatrième mode de réalisation avec une barre plate horizontalement en position fermée et mobile en rotation le long de son bord longitudinal externe, et
- La figure 5 représente, schématiquement, une forme de réalisation d'un cadre d'éjection.

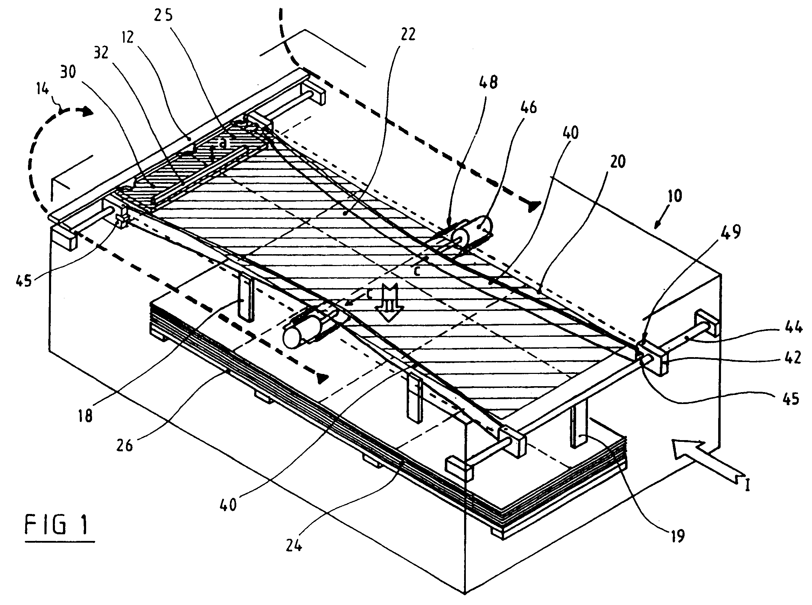

Sur la figure 1 est illustrée une station de réception 10 dans laquelle arrive des feuilles 20 emmenées en translation horizontale "I" par une barre de pinces 12 elle-même entraînée par une chaîne sans fin 14 illustrée schématiquement. Une fois arrivées contre des butées frontales (non représentées), ces feuilles 20 sont relâchées par les pinces 12 et leur bord frontal 25 est coupé au niveau d'une ligne appelée "premier filet" par une guillotine 32 agissant par rapport à une table de guillotine 30. Cette feuille est ensuite lâchée dans une chute "II" en translation verticale, cette chute étant guidée par des taquets ou rangeurs 18 et 19 jusque sur le dessus d'une pile 24 formée sur une palette de retrait 26.

Or, suite aux découpes préalables, ces feuilles 20 comprennent plusieurs poses 22 côte à côte et/ou les unes derrières les autres "en remorque", ces posez n'étant plus reliées entre elles que par des ponts de matière. Les feuilles 20 ainsi fragilisées doivent être correctement soutenues tout au long de leur transfert à l'intérieur de la station 10 et lors de la coupe du premier filet afin d'être maintenues dans un plan horizontal jusqu'à leur lâchée. Pour ce, le cadre selon ce premier mode de réalisation de l'invention est formé de deux barres laterales 40 mobiles dans le sens transversal par rapport au déplacement de la feuille 20.

Chaque barre 40 est réalisée de telle sorte à présenter une relative flexibilité dans le plan horizontal mais une rigidité suffisante dans le plan vertical. A titre d'exemple, une telle barre peut être réalisée en matériau plastique ayant un coefficient d'élasticité compris entre 900 N/mm2 et 2000 N/mm2 tel qu'un polyamide, cette barre présentant une section rectangulaire verticale de l'ordre de 4,5 par 0,7 mm.

Chaque extrémité de cette barre 40 présente un ergot 45 transversal horizontal orienté vers l'extérieur de la station, cet ergot étant percé d'un orifice vertical oblong et orienté dans le sens longitudinal. Ainsi, cet ergot peut être tenu dans une pièce de support 42 au moyen d'une goupille verticale 49, cette liaison autorisant un certain jeu dans le sens longitudinal nécessaire lors du cintrage futur de la barre. En alternative, chacune des extrémités de cette barre 40 pourrait être engagée dans l'orifice d'un étrier qui, en coupe horizontale, présenterait une section conique de base orientée vers la barre et dont la hauteur interne correspondrait à la hauteur de la barre.

Par ailleurs, la partie centrale de cette barre est tenue par l'extrémité d'un actuateur pneumatique 46 orthogonal et situé dans un même plan horizontal. Lorsque activé, cet actuateur 46 à simple action déplace la barre d'une position initiale dans laquelle celle-ci est rectiligne selon le trait pointillé de la figure vers une position sortie où elle se retrouve cintrée, par exemple de 30 mm. Cette course est suffisante pour empêcher la chute de la feuille 20. Lors de ce cintrage, chaque extrémité des barres 40 a pu, si nécessaire, légèrement coulisser dans la pièce de support correspondante 42 grâce à la liaison orifice oblong/goupille de fixation 49. Le rappel de la barre en position initiale est par contre réalisé au moyen de ressorts de traction 48 montés parallèlement à l'actuateur 46.

L'actuateur 46 peut être constitué d'un piston en matière plastique et d'un corps métallique rigide. La fixation du piston et de la barre 40 plastique peut alors être réalisée par l'intermédiaire d'un insert métallique ou d'une vis spéciale pour matière thermodurcissable. L'avantage de ce dispositif de positionnement de barre est la fiabilité du fait de la simplicité des pièces et, en outre, leur coût raisonnable. Si désiré, on peut remplacer cet actuateur 46 et ces moyens de rappel 48 par un actuateur pneumatique unique à double action.

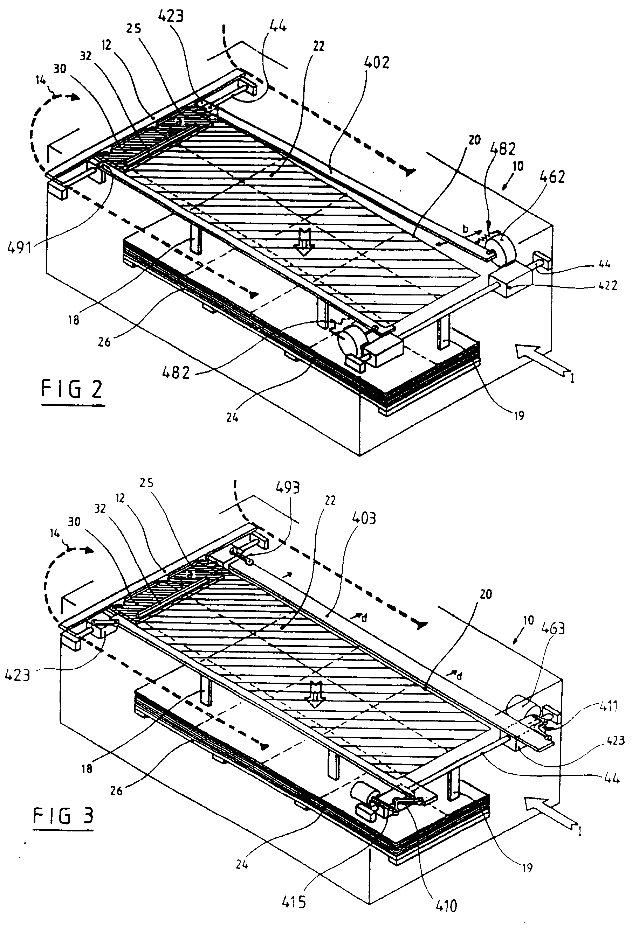

Sur la figure 2 est illustrée une seconde variante de réalisation de l'invention. Dans cette figure, les pièces similaires à celles décrites précédemment sont désignées par des références identiques. Dans cette variante, les deux barres latérales d'appui 402 de la feuille 20 sont orientées à plat, c'est-à-dire que leur largeur est maintenant dans le sens horizontal. Leurs extrémités aval sont montées en pivotement autour des axes verticaux 491 solidaires de pièces de support 423 montées en coulissement sur un axe transversal 44. Par contre, leur extrémités amont sont tenues par des actuateurs linéaires à simple action 462 transversaux qui sont solidaires de pièces de support 422 amont également engagées en coulissement sur un axe transversal 44. Un ressort de traction 482 parallèle à l'actuateur 462 relie la barre 402 en correspondance au corps de cet actuateur ou à une pièce qui lui est solidaire.

Lorsque l'actuateur 462 est activé, tel qu'illustré sur le côté gauche de la figure, celui-ci avance la barre 402 en une position dite "fermée" vers l'intérieur de la station, et ce contre la traction du ressort 482. La barre 402 est alors en position pour soutenir le bord latéral de la feuille 20 pendant tout le mouvement d'arrivée dans la station et lors de la séparation de la partie frontale 25 par la guillotine 30/32. Puis les actuateurs 462 sont désactivés et les ressorts 482 tirent en arrière les extrémités amont des barres dans un mouvement "b" illustré sur le côté droit de cette figure 2. La feuille 20 commence alors sa chute "II" progressivement à partir de son bord amont et en étant guidée par les rangeurs 19 puis 18. Là encore, l'inertie des pièces en mouvement est particulièrement faible permettant des actions rapides et bien synchronisées.

Sur la figure 3 est illustrée une troisième variante dans laquelle les barres latérales d'appui 403 sont également à plat, en reposant en chaque extrémité sur les pièces de support amont et aval 423. L'extrémité aval de chaque barre est reliée à sa pièce de support correspondante par une biellette horizontale 493 faisant un angle d'environ 45 degrés avec cette barre lorsque celle-ci est en position dite "fermée" tel qu'illustré sur le côté gauche de la figure 3. Par contre, l'extrémité amont de chaque barre est reliée à la première branche 411 d'un levier pivotant dans un plan horizontal autour d'un axe solidaire de la pièce de support sous-jacente 423, ce levier étant disposé de telle sorte que cette première branche soit en permanence parallèle à la biellette 493.

L'autre branche 410 de ce levier est reliée à l'axe de sortie 415 d'un actuateur 463 qui, dans l'exemple illustré, est monté sur la pièce de support 423 parallèlement à la barre 403. L'orientation de cet actuateur dépend en fait de l'angle entre les deux branches 410/411 du levier.

La biellette 493, la barre 403 et la première branche 411 du levier étant situés dans un même plan et la biellette étant toujours parallèle à la première branche, ces pièces forment en permanence un parallélogramme. Ainsi, lorsque l'axe de sortie 415 de l'actuateur tire sur la seconde branche 410 du levier alors que la barre est en position fermée tel qu'illustré sur le côté gauche de la figure 3, elle imprime une rotation à la seconde branche 410 qui est répétée à l'identique par la biellette 493, la barre se retirant dans un mouvement "d" essentiellement de translation uniforme orthogonale avec un léger mouvement fauchant, et ce jusqu'à atteindre la position dite "ouverte" illustrée sur le côté droit de cette même figure, mouvement autorisant à un certain moment une chute "II" équilibrée de la feuille 20. Le retour en position "fermée" des barres est réalisé par l'actuateur 463 poussant en avant la première branche 411 du levier.

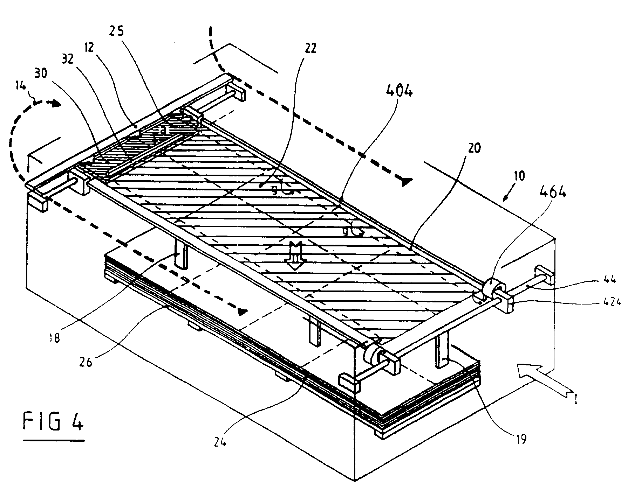

Sur la figure 4 est illustrée une quatrième variante dans laquelle chaque barre latérale d'appui 404 est tenue, mobile en rotation le long d'un axe longitudinal proche et parallèle de son bord externe, d'une part en aval par la pièce de support 424 et d'autre part en amont par l'axe de sortie d'un actuateur rotatif 464 lui-même solidaire de la pièce de support amont 424.

Comme on peut aisément le comprendre, l'actuateur 464 redresse la barre 404 pour la mettre "à plat" lors de l'arrivée d'une feuille 20 tel qu'illustré sur le côté gauche de la figure 4, puis, dans un mouvement rotatif "g" tourne la barre vers le bas jusqu'en une position verticale tel qu'illustré sur la partie gauche de cette même figure, position permettant une chute homogène "II" de la feuille qui est ensuite guidée par les rangeurs 18,19. L'actuateur peut être à double actions ou à action simple, un ressort hélicoïdal assurant alors le retour à la position ouverte de repos.

Comme on a pu le constater sur chacune des figures, les pièces de support 42 sont elles-mêmes montées sur des axes de positionnement 44 ce qui permet de plus ou moins rapprocher les barres 40 l'une vers l'autre selon le format des feuilles 20 traitées.

Avantageusement, un dispositif à chaîne sans fin ou autre permet de régler simultanément les pièces de support 42 en conservant une symétrie par rapport au plan médian de la station 10.

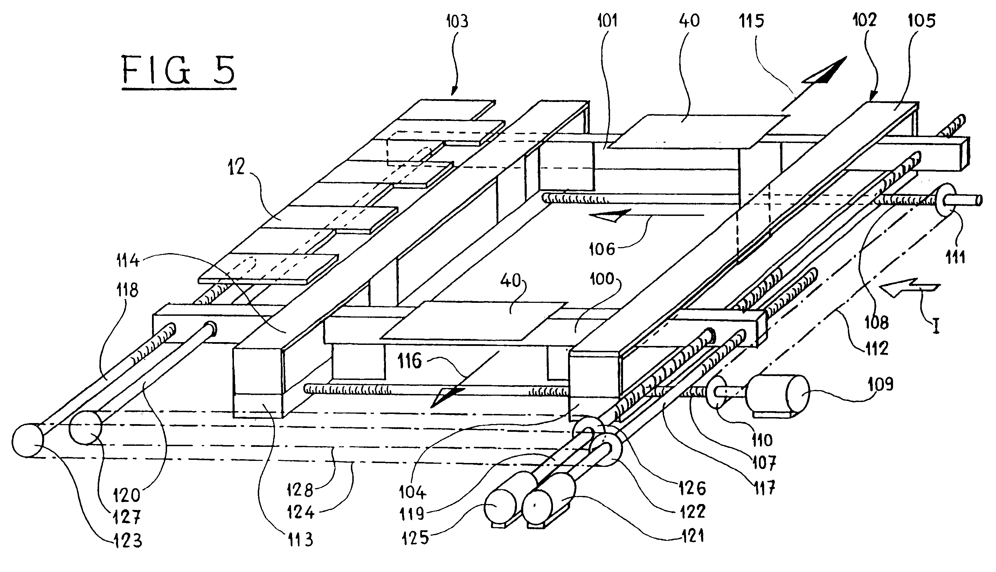

Si désiré, le cadre peut être fermé à l'arrière par une tablette (voir fig. 5) pouvant être animée d'avant en arrière par un actuateur pneumatique à double action (non représenté). Cet ensemble pourrait être également positionné plus ou moins en avant au préalable selon le format de la feuille 20. On peut également envisager d'équiper la tablette par une barre en matière plastique prise entre deux étriers latéraux et cintrés par un actuateur pneumatique central.

La figure 5 représente, schématiquement, une forme de réalisation d'un cadre d'éjection équipé avec des barres 40 telles que celles déjà décrites ci-avant. Ce cadre comporte deux longerons 100 et 101 formant ses parois latérales et une traverse 102 formant sa paroi amont par rapport au sens de passage des éléments en plaque indiqué par la flèche "I". La paroi aval de ce cadre est quant à elle formée par une table de guillotine 103. La traverse 102 est constituée par un socle 104 sur lequel est fixée une coulisse 105 servant au guidage des longerons 100 et 101. La table de guillotine 103 est réalisée de la même manière et sert elle aussi de guidage, au moyen de la coulisse 114, pour l'autre extrémité des longerons 100 et 101. La table de guillotine 103 n'est pas déplaçable alors que la traverse 102 peut se déplacer, dans le sens indiqué par la flèche 106, sous l'effet des vis de réglage 107 et 108 dont le mouvement est obtenu à l'aide d'un moteur-réducteur 109 agissant sur la vis de réglage 107 agencée de façon à pouvoir transmettre son mouvement de rotation à la vis de réglage 108 par l'intermédiaire des roues à chaînes 110 et 111 reliées par une chaîne 112. Les vis de réglage 107 et 108 s'engagent dans un filetage aménagé dans le socle 104 et sont guidées à leur autre extrémité dans des paliers montés dans le socle 113 de la table de guillotine 103.

Les longerons 100 et 101 guidés dans les coulisses 105 et 114 fixées sur les socles 104 et 113 sont déplaçables latéralement, dans le sens indiqué par les flèches 115 et 116, sous l'action des vis de réglage 117, 118, 119 et 120. Les vis de réglage 117 et 118 commandent le déplacement du longeron 100 et les vis de réglage 119 et 120 commandent le déplacement du longeron 101. Un moteur-réducteur 121 entraîne la vis 117 qui transmet son mouvement de rotation à la vis 118 par l'intermédiaire des roues dentées 122 et 123 reliées par une chaîne 124.

Un autre moteur-réducteur 125 entraîne la vis 119 qui elle transmet son mouvement de rotation à la vis 120 par l'intermédiaire des roues dentées 126 et 127 reliées par une chaîne 128.

Ce cadre autorise donc, sans démontage de ces composants, un réglage progressif du plus petit au plus grand format des éléments en plaques ou feuilles 20.

Par ailleurs, ce cadre à géométrie variable peut aussi être installé en une position intermédiaire afin de supporter une pile secondaire de feuilles 20 créées lors du remplacement d'une palette pleine 26 par une nouvelle palette vide, celle-ci étant amenée presque jusqu'à niveau du cadre intermédiaire avant réouverture de celui-ci (non illustré).

## Revendications

1. Cadre à géométrie variable pour le support momentané d'un élément en plaque horizontal (20), tel que feuille de papier ou de carton, élément amené à effectuer par la suite une translation verticale entre des taquets de guidage et d'équerrage (18,19) comme, par exemple, au sein d'une station de réception d'une machine (10) où sont constituées des piles d'éléments, ce cadre comprenant des appuis rétractables latéraux,
caractérisé en ce que, de chaque côté, les appuis latéraux sont constitués d'une barre plate horizontale (40) s'étendant sensiblement sur toute la longueur du cadre et dont le déplacement, d'une position avancée de support de la feuille à une position rétractée autorisant la chute verticale de la feuille, est assuré par un actuateur (46) agissant sur la barre plate soit directement soit au travers d'un levier unique et en ce que ladite barre plate (40) est montée sur des longerons (100, 101) déplaçables latéralement dans des coulisses (105, 114) dont l'une, est également déplaçable, dans le sens de passage des éléments en plaques, par rapport auxdits longerons (100, 101).

2. Cadre selon la revendication 1, caractérisé en ce que la barre plate (40) est orientée de telle sorte que sa largeur soit dans le sens vertical, et en ce que le dispositif de maintien de ses extrémités est tel que cette barre est apte à fléchir que dans le plan horizontal, la position de la partie centrale de la barre étant directement contrôlée par un actuateur (46) horizontal transversal.

3. Cadre selon la revendication 2, caractérisé en ce que chaque extrémité d'une barre (40) présente un orifice vertical oblong et orienté dans le sens longitudinal, lequel orifice est traversé par un axe ou goupille vertical (49) de maintien qui est solidaire du châssis de la station.

4. Cadre selon la revendication 2, caractérisé en ce que chaque extrémité est insérée en coulissement dans l'ouverture d'un étrier dont la section rectangulaire verticale présente une hauteur constante identique à celle de la barre et une largeur croissante en direction de la barre.

5. Cadre selon l'une des revendications 2 à 4, caractérisé en ce que les barres sont réalisées en matériaux synthétiques présentant un coefficient d'élasticité compris entre 900 N/mm2 et 2000 N/mm2.

6. Cadre selon l'une des revendications 2 à 5, caractérisé en ce que les barres sont réalisées en polyamide.

7. Cadre selon la revendication 1, caractérisé en ce que la barre plate (402) est orientée de telle sorte que sa largeur soit dans le sens horizontal, l'une de ses extrémités étant montée en pivotement autour d'un axe vertical (491), l'autre extrémité étant directement avancée par un actuateur (462) horizontal linéaire transversal, et reculée soit par l'actuateur soit par un ressort de traction (482) agissant entre la barre et le corps de l'actuateur.

8. Cadre selon la revendication 1, caractérisé en ce que la barre plate (403) est orientée de telle sorte que sa largeur soit dans le sens horizontal, l'une de ses extrémités étant reliée à l'une des branches (410) d'un levier dont l'autre branche (411) peut être déplacée par un actuateur linéaire (463), l'autre extrémité de la barre étant reliée à une biellette (493) parallèle à la première branche du levier; la biellette, le levier et l'actuateur étant situés sensiblement dans le même plan horizontal que la barre plate.

9. Cadre selon la revendication 1, caractérisé en ce que la barre plate (404) est mobile en rotation le long d'un axe proche et parallèle à son bord longitudinal externe, et en ce qu'un actuateur linéaire transversal agit sur une branche protubérant de la barre au niveau de l'axe de rotation.

10. Cadre selon la revendication 1, caractérisé en ce que la barre plate (404) est mobile en rotation le long d'un axe proche et parallèle à son bord longitudinal externe, et en ce qu'un actuateur rotatif (464) est directement relié à la barre dans le prolongement de son axe de rotation.

11. Cadre selon l'une des revendications 1 à 9, caractérisé en ce que l'actuateur est à simple action d'avance linéaire lorsque activé, des moyens de rappel (48) parallèles à l'actuateur étant prévus pour rétracter la barre (40) au repos.

12. Cadre selon l'une des revendications précédentes, caractérisé en ce que les extrémités des barres (40) ainsi que les actuateurs (46) correspondants sont installés sur des pièces de support (42) engagées sur des axes (44) le long desquels ils sont déplaçables en fonction du format de l'élément en plaque.

13. Cadre selon l'une des revendications précédentes, caractérisé en ce qu'une tablette arrière du cadre (10) est constituée par une barre fléchissante que dans un plan horizontal, la position de la partie centrale de cette barre étant contrôlée par des moyens de positionnement.

## Claims

1. Frame of variable geometry for the temporary supporting of a horizontal plate-like workpiece (20), such as a sheet of paper or cardboard, which workpiece is destined to effectuate later on a vertical translation between the guiding and squaring stops (18, 19) as for example located within a delivery station of a machine (10) where piles of elements are constituted, the said frame comprising lateral retractable supports, characterized by the fact that on either of their sides the lateral supports consist of a horizontal flat bar (40) extending over almost the whole length of the frame and whose shifting movement from an advanced position of the sheet support to a retracted position allowing the vertical dropping of the sheet is ensured by an actuator (46) acting on the flat bar either direct or possibly with the help to a single lever, and by the fact that the said flat bar (40) is fitted on lengthwise beams (100, 101) laterally shiftable in slideways (105, 114), one of them being also shiftable in the travelling direction of the plate-like workpieces with regard to the said lengthwise beams (100, 101).

2. Frame according to claim 1, characterized by the fact that the flat bar (40) is arranged in such a way that its width will be positioned horizontally, and by the fact that the device for maintaining its ends is such that this bar is flexible in the horizontal plane only, the position of the central part of the bar being directly controlled by a cross horizontal actuator (46.)

3. Frame according to claim 2, characterized by the fact that each end of a bar (40) has a vertical oblong orifice arranged lengthwise, the said orifice being crossed by a vertical axle or a holding pin (49) which is permanently fitted on the structure of the station.

4. Frame according to claim 2, characterized by the fact that each end can be slid in the aperture of a strap whose vertical rectangular section has a constant height indentical to the one of the bar and a length increasing in the direction of the bar.

5. Frame according to one of the claims 2 to 4, characterized by the fact that the bars are made of synthetical material having a modulus of elasticity included between 900 N/mm2 and 2000 N/mm2.

6. Frame according to one of the claims 2 to 5, characterized by the bars being made of polyamide.

7. Frame according to claim 1, characterized by the fact that the flat bar (402) is arranged in such a way that its width will be positioned horizontally, one of its ends being pivotable around a vertical axle (491) whereas the other end is directly advanced by a horizontal linear actuator (462) and retracted either by the actuator or by a draw-spring (482) acting between the bar and the body of the actuator.

8. Frame according to claim 1, characterized by the fact that the flat bar (403) is arranged in such a way that its width will be positioned horizontally, one of its ends being linked to one of the branches (410) of a lever whose other branch (411) can be shifted by means of a linear actuator (463), the other end of the bar being linked to a connecting-rod (493) parallel to the first branch of the lever; the connecting-rod, the lever and the actuator being arranged almost in the same horizontal plane than the flat bar.

9. Frame according to claim 1, characterized by the fact that the flat bar (404) is rotarily movable along an axle close and parallel to its outer lengthwise edge, and by the fact that a cross linear actuator acts on a branch protruding from the bar at the level of the rotation axis.

10. Frame according to claim 1, characterized by the fact that the flat bar (404) is rotary movable along an axle close and parallel to its outer lengthwise edge and by the fact that a rotary actuator (464) is directly connected to the bar in the extention of its rotation axis.

11. Frame according to one of the claims 1 to 9, characterized by the fact that the actuator has a single-acting linear advance when actuated, pull-back means (48) parallel to the actuator being foreseen for retracting the bar (40) to a resting position.

12. Frame according to one of the aforementioned claims, characterized by the fact that the ends of the bar (40) as well as the corresponding actuators (46) are installed on supporting pieces (42) engaged on axes (44) along which they can be shifted according to the size of the plate-like workpiece.

13. Frame according to one of the aforementioned claims, characterized by the fact that a retractable shelf of the frame (40) consists of a bar flexible in the horizontal plane only, the position of its central part being controlled by positioning means.

## Patentansprüche

1. Rahmen veränderlicher Geometrie zum zeitweiligen Haltern eines in Form einer horizontalen Platte vorliegenden Elements (20), bspw. eines Bogens Papier oder Pappe, welches Element dazu gebracht wird, nachfolgend eine vertikale Translation zwischen Führungs- und Winkelhaltigkeits-Anschlägen (18, 19) durchzuführen, bspw. im Inneren einer Aufnahmestation einer Maschine (10), wo Stapel von Elementen gebildet werden, wobei dieser Rahmen zurückziehbare seitliche Stützen umfasst, **dadurch gekennzeichnet**, dass die seitlichen Stützen auf jeder Seite von einem horizontalen flachen Stab (40) gebildet sind, der sich im wesentlichen über die gesamte Länge des Rahmens erstreckt und dessen Verlagerung von einer vorgeschobenen Stellung zum Haltern des Bogens in eine den vertikalen Fall des Bogens ermöglichende zurückgezogene Stellung durch ein Stellglied (46) sichergestellt ist, wobei dieses Stellglied (46) auf den flachen Stab entweder unmittelbar oder über einen einzigen Hebel einwirkt, und dass der flache Stab (40) auf Längsträgern (100, 101) angebracht ist, die in Schiebeführungen (105, 114) seitlich verlagerbar sind, von denen eine in Richtung der Bahn der plattenförmigen Elemente bezüglich der Längsträger (100, 101) ebenfalls verlagerbar ist.

2. Rahmen nach Anspruch 1, **dadurch gekennzeichnet**, dass der flache Stab (40) derart orientiert ist, dass seine Breite in vertikaler Richtung angeordnet ist, und dass die Vorrichtung zum Halten seiner Enden derart ausgebildet ist, dass dieser Stab nur in der horizontalen Ebene biegbar ist, wobei die Stellung des Mittelabschnitts des Stabs unmittelbar von einem Horizontal-Transversal-Stellglied (46) gesteuert ist.

3. Rahmen nach Anspruch 2, **dadurch gekennzeichnet**, dass jedes Ende eines Stabs (40) eine vertikale längliche und in Längsrichtung orientierte Öffnung aufweist, welche von einer vertikalen Halteachse oder einem vertikalen Haltestift (49) durchsetzt ist, die bzw. der mit dem Gestell der Station verbunden ist.

4. Rahmen nach Anspruch 2, **dadurch gekennzeichnet**, dass jedes Ende verschiebbar in die Öffnung eines Bügels eingesetzt ist, dessen vertikaler rechteckiger Querschnitt eine konstante Höhe aufweist, die jener des Stabs identisch ist, sowie eine in Richtung des Stabs zunehmende Breite aufweist.

5. Rahmen nach einem der Ansprüche 2 bis 4, **dadurch gekennzeichnet**, dass die Stäbe aus Kunststoff mit einem zwischen 900 N/mm2 und 2000 N/mm2 liegenden Elastizitätskoeffizienten gefertigt sind.

6. Rahmen nach einem der Ansprüche 2 bis 5, **dadurch gekennzeichnet**, dass die Stäbe aus Polyamid gefertigt sind.

7. Rahmen nach Anspruch 1, **dadurch gekennzeichnet**, dass der flache Stab (402) derart orientiert ist, dass seine Breite in horizontaler Richtung verläuft, wobei eines seiner Enden um eine vertikale Achse (491) schwenkbar angebracht ist, wobei das andere Ende unmittelbar von einem Horizontal-Transversal-Linearstellglied (462) vorgeschoben wird und entweder von dem Stellglied oder von einer zwischen dem Stab und dem Körper des Stellglieds wirkenden Zugfeder (482) zurückgeholt wird.

8. Rahmen nach Anspruch 1, **dadurch gekennzeichnet**, dass der flache Stab (403) derart orientiert ist, dass seine Breite in horizontaler Richtung verläuft, wobei eines seiner Enden mit einem der Schenkel (410) eines Hebels verbunden ist, dessen anderer Schenkel (411) von einem Linearstellglied (463) verlagerbar ist, wobei das andere Ende des Stabs mit einer zum ersten Schenkel des Hebels parallel verlaufenden Schwinge (493) verbunden ist; wobei die Schwinge, der Hebel und das Stellglied im wesentlichen in der gleichen horizontalen Ebene angeordnet sind wie der flache Stab.

9. Rahmen nach Anspruch 1, **dadurch gekennzeichnet**, dass der flache Stab (404) längs einer nahegelegenen Achse drehbeweglich ist, die zu seinem äusseren Längsrad parallel verläuft, und dass nur ein Transversal-Linearstellglied auf einen Schenkel einwirkt, der aus dem Stab im Bereich der Drehachse hervorsteht.

10. Rahmen nach Anspruch 1, **dadurch gekennzeichnet**, dass der flache Stab (404) längs einer nahegelegenen Achse drehbeweglich ist, die zu seinem äusseren Längsrad parallel verläuft, und dass nur ein Drehstellglied (464) unmittelbar mit dem Stab in der Verlängerung seiner Drehachse verbunden ist.

11. Rahmen nach einem der Ansprüche 1 bis 9, **dadurch gekennzeichnet**, dass das Stellglied ein Stellglied mit einfacher linearer Vorschubsbewegung bei Betätigung ist, wobei zum Stellglied parallele Rückstellmittel (48) zum Zurückholen des Stabs (40) in die Ruhestellung vorgesehen sind.

12. Rahmen nach einem der vorhergehenden Ansprüche, **dadurch gekennzeichnet**, dass die Enden des Stabs (40) sowie die entsprechenden Stellglieder (46) auf Halterungselementen (42) angebracht sind, welche mit Achsen (44) in Eingriff sind, längs derer sie als Funktion des Formats des plattenförmigen Elements verlagerbar sind.

13. Rahmen nach einem der vorhergehenden Ansprüche, **dadurch gekennzeichnet**, dass eine hintere Platte des Rahmens (10) von einem Stab gebildet ist, der sich nur in einer horizontalen Ebene biegt, wobei die Stellung des zentralen Abschnitts dieses Stabs von Positionierungsmitteln gesteuert ist.
